# EUROPEAN PATENT SPECIFICATION

(11) **EP 2 363 229 B1**
(45) Date of publication and mention of the grant of the patent: **19.09.2012**
(21) Application number: 11163482.0
(22) Date of filing: 22.06.2007
(51) Int. Cl.: B23D 17/06, B23D 35/00, E21B 29/00

(54) **Method for cutting a conductor pipe having inner and outer metal pipes with grouting disposed between the inner and outer pipes**
Verfahren zum Schneiden eines Leitungsrohres welches innere und äussere Metallrohre aufweist mit einer Zementierung zwischen innerem und äusserem Rohr
Procédé de coupe d'un tube conducteur avec tuyaux métallique intérieur et extérieur avec un cimentation entre le tuyaut intérieur et extérieur

(30) Priority: 23.06.2006 US 815832 P; 13.04.2007 US 907709 P; 21.06.2007 US 766387
(43) Date of publication of application: 07.09.2011
(62) Divisional of application: 07796344.5
(73) Proprietor: Stanley Black & Decker, Inc., New Britain, CT 06053 (US)
(72) Inventor: Rafn, Mark D., Two Harbors, MN 55804 (US); Knutson, David Bradley, Duluth, MN 55804 (US); Bubacz, Shane L., Duluth, MN 55803 (US)
(74) Representative: Stentiford, Andrew Charles

(56) References cited:
- WO-A1-99/25611
- US-A- 4 734 983
- US-A- 5 598 754
- US-A1- 2005 082 063

## Description

The present invention relates to a method of using material processing shears.

Embodiments relate generally to heavy-duty processing shears, and relates particularly to cutting blades for heavy-duty processing shears used to process decommissioned oil platforms.

As oil well platforms are decommissioned, various materials must be cut to disassemble various components of the platforms. In particular, such platforms include conductor pipes that utilize nested metal pipes (e.g., 3 string - 13"OD, 20"OD, and 30"OD, all with ½" wall thicknesses) with grouting (e.g., concrete or mortar) disposed between the pipes. The center of the innermost pipe remains hollow for the transmission of oil. The strength, size, and composition of conductor pipes advantageously makes them strong during use, but disadvantageously makes them difficult to cut upon decommissioning of the oil well platform.

Sub-aqueous conductor pipes have been conventionally processed/cut via water jets, band saws, torches, and/or explosives. Unfortunately, such cutting techniques frequently require operation by divers who must dive to extreme depths (e.g., 1000 feet) in hazardous waters underneath a decommissioned oil platform.

Conventional material processing shears are poorly suited to cut/process conductor pipes for several reasons. First, the generally flat shearing blades of conventional shears (see, e.g., U.S. Patent No. 5,992,023) tend to compress and deform the cross-section of the processed material before shearing the material. The force used to deform the cross-section detracts from the force used to actually cut/shear the material. The rigidity of a conductor pipes' construction resists deformation. Consequently, when a conventional heavy-duty shear attempts to cut a conductor pipe, much of the shears' force is exerted in a clamp-like manner in attempt to deform the conductor pipe, sometimes leaving insufficient power to actually cut/shear the pipe. Second, conventional heavy-duty demolition shears utilize V-shaped upper and lower shearing blades that each include apexes at the base of the V shape (see, e.g., U.S. Patent No. 5,992,023). When such a V shape is used to cut conductor pipe, the shears simultaneously cut the pipe at two different locations, i.e., one cut at each of the straight sides of the V-shape. The shape therefore distributes the cutting force of the conventional shears, leaving less power at each cutting location. The reduced power at each cutting location may be insufficient to shear the processed material, which may result in stalling of the shears 10.
US5598754 discloses a cutting tool for cutting relatively thick-walled or solid tubular members. The cutting tool includes an annular frame having a rotatable ring which is adapted to surround the tubular member to be cut. A cutting assembly is radially connected to the rotatable ring of the annular frame so as to be orbitally movable about the tubular member to be cut in response to rotation of said rotatable ring. The radial cutting assembly carries a bit subassembly for cutting said tubular member.
US-A-2005/082063 discloses an apparatus for use in severing casing as it is pulled from a wellbore. The apparatus comprises a clamping assembly, a drilling assembly and a cutting assembly. The apparatus may be disposed at the end of a telescopic arm, with the components being remotely operated by personnel using a control panel.
US4734983 discloses a high power cutting tool which is effective in cutting through sheet metal, for example for extracting accident victims from wreckage. The tool has a stationary blade and a curved, movable blade and is operated by hydraulic power.
WO-A-9925611 discloses a submersible work vessel including a set of openable jaws that are designed to engage and underwater pipe. When the pipe is engaged, it will pass through an internal work space of the submersible work vessel. When the jaws have engaged the pipe, the internal work space should be substantially watertight, at which point the water in the internal work space may be pumped out. When the water has been substantially evacuated, a worker may enter the internal work space and work on the pipe.
According to the present invention, there is provided a method of using a material processing shears, the shears comprising: first and second jaws pivotally connected to each other for relative pivotal movement about a jaw axis between open and closed positions, the first jaw having a first cutting blade with a first cutting edge; and a fluid driven actuator operatively extending between the jaws for selective powered movement of the jaws between their open and closed positions, the method comprising: positioning the shears such that a work piece is disposed between the first and second jaws; and cutting the work piece primarily with the first cutting blade such that the cutting of the work piece is predominantly localized at an intersection between the work piece and the first cutting blade, while the second jaw predominantly supports the work piece without cutting into it, wherein the work piece comprises a conductor pipe having inner and outer metal pipes with grouting disposed between the inner and outer metal pipes.

In embodiments, the present invention provides an improved method of using material processing shears that is designed to efficiently process conductor pipe or other tubular materials within bodies of water or on land.

In embodiments, the present invention provides an improved method of using material processing shears that includes a substantially convexly shaped cutting blade. Such a blade tends to focus its cutting force on a single part of a pipe to be cut, thereby efficiently cutting the pipe as compared to some conventional shears that attempt to cut through the pipe at multiple locations. The shears may include a cradle on the opposing jaw that is shaped to accommodate the work piece. The cradle tends to keep the work piece between the jaws and discourages excessive deformation of the work piece during cutting operations.

In embodiments, the present invention provides a method of using a material processing shears. The shears include first and second jaws pivotally connected to each other for relative pivotal movement about a jaw axis between open and closed positions. The first jaw has a first cutting blade with a first cutting edge. The shears also include a fluid driven actuator operatively extending between the jaws for selective powered movement of the jaws between their open and closed positions. The method includes submerging the shears into a body of water, positioning the shears such that a work piece is disposed between the first and second jaws, and cutting the work piece by operating the fluid driven actuator to move the jaws from their open to their closed position.

In one or more of these embodiments, positioning the shears such that the work piece is disposed between the first and second jaws comprises positioning the work piece in a recess in the second jaw such that the recess tends to keep the work piece disposed between the jaws. Either the first or second jaw may be the upper jaw. The recess may be formed by a concave portion of the second jaw. The first cutting edge may bulge toward the concave portion.

In one or more of these embodiments, the first cutting edge initially pierces the work piece. The method may include cutting the work piece primarily with the first cutting blade such that the cutting of the work piece is predominantly localized at an intersection between the work piece and the first cutting blade, while the lower jaw predominantly supports the work piece without cutting into it.

The work piece comprises a conductor pipe with inner and outer metal pipes having grouting disposed therebetween. The outside diameter of the outer metal pipe may be at least 15 inches, at least 24 inches, and/or at least 29 inches. The conductor pipe may also include an intermediate metal pipe disposed between the inner and outer pipes. Grouting is disposed between the outer and intermediate metal pipes and between the inner and intermediate metal pipes. The conductor pipe may be part of a sea-floor mounted oil platform.

In one or more of these embodiments, as viewed along the jaw axis, the first cutting edge includes a portion that bulges toward the second jaw. The first cutting edge may be convex. The convexity may form an arc that is at least 60 degrees, at least 90 degrees, at least 100 degrees, and or at least 110 degrees.

In one or more of these embodiments, the first cutting blade includes first and second surfaces that intersect each other at the first cutting edge. As viewed in a plane that perpendicularly intersects the first cutting edge, the second surface forms an acute angle with the first surface. The acute angle may be less than 80 degrees, less than 70 degrees, and/or less than 55 degrees. The first surface may be substantially planar and perpendicular to the jaw axis.

In one or more of these embodiments, the length of the first cutting edge is at least 24 inches. The first cutting edge may have a compound curvature.

In one or more of these embodiments, the fluid driven actuator is a hydraulic piston and cylinder. The cylinder may have an internal diameter of at least 3 inches, at least 5 inches, at least 10 inches, at least 12 inches, at least 18 inches, and/or at least 20 inches.

In one or more of these embodiments, the shears weigh at least 200 pounds, at least 500 pounds, at least 1,000 pounds, and/or at least 10,000 pounds. The shears may include a plurality of mounting lugs for mounting the shears to a base machine.

One or more embodiments of the present invention comprises a method for creating a shears having first and second relatively movable jaws and first and second primary and secondary blade insert seats in the first and second jaws, respectively. The method includes mounting a first blade insert member to the first jaw, the first blade insert member having mounting portions that complement the primary and secondary blade insert seats of the first jaw, the first blade insert member having a cutting edge with a convex portion. The method also includes mounting a second blade insert member to the second jaw, the second blade insert member having mounting portions that complement the secondary blade insert seat of the second jaw. The second blade insert member has a raised portion that protrudes from the second jaw toward the first jaw. The first and second blade insert members may be mounted such that the convex portion and the raised portion pass by each other as the first and second jaws move toward each other.

Additional and/or alternative advantages and salient features of the invention will become apparent from the following detailed description, which, taken in conjunction with the annexed drawings, disclose preferred embodiments of the invention.

### BRIEF DESCRIPTION OF THE DRAWINGS

Referring now to the drawings which form a part of this original disclosure:

FIG. 1 is a left front perspective view of a material-processing shears according to an embodiment of the present invention;

FIG. 2 is a cross-sectional view of the shears in FIG. 1, taken along the line 2-2 in FIG. 3;

FIG. 3 is a partial left plan view of the shears in FIG. 1;

FIG. 4 is a detailed view of FIG. 3;

FIG. 5 is a side view of the shears in FIG. 1 being used underwater to process a decommissioned oil platform;

FIG. 6 is a side left plan view of the shears in FIG. 1;

FIG. 7 is a side view of the shears in FIG. 1 being used above water to process a decommissioned oil platform;

FIG. 8 is a cross-sectional view of a blade insert according to an alternative embodiment of the present invention;

FIG. 9 is a side view of a material processing shears according to another embodiment of the present invention;

FIG. 10 is a cross-sectional view of the shears in FIG. 9;

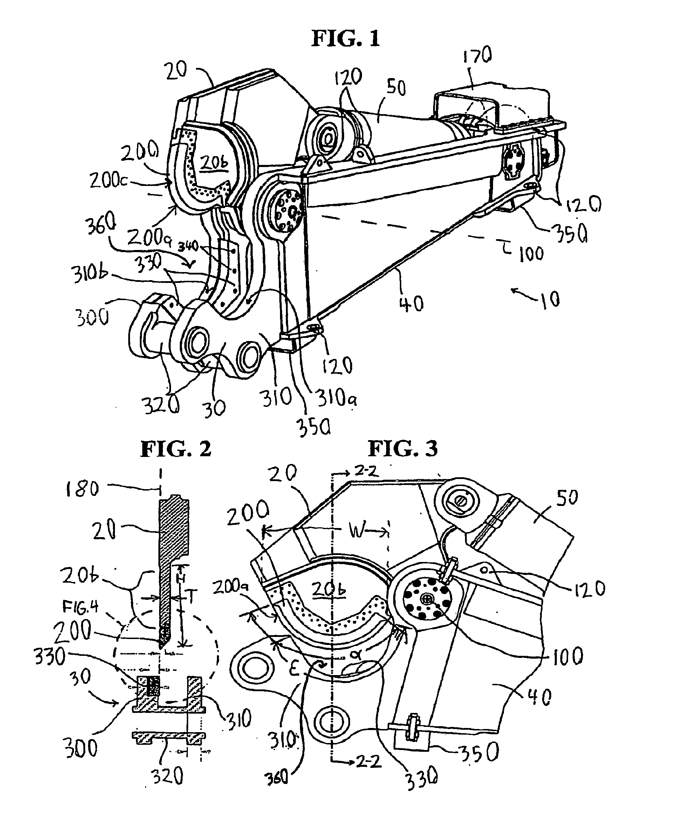

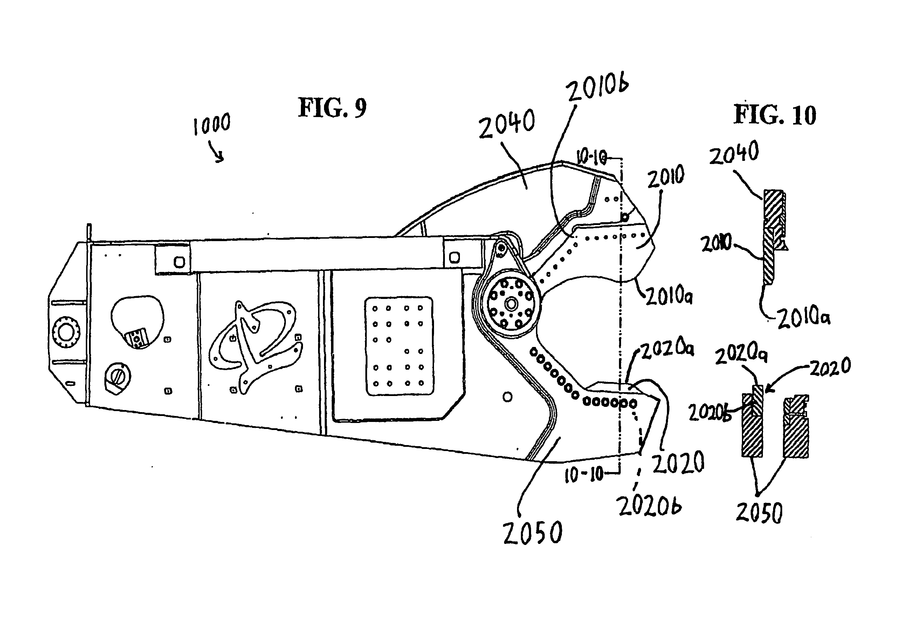

FIG. 1 is a front, left perspective view of the shears in FIG. 9;

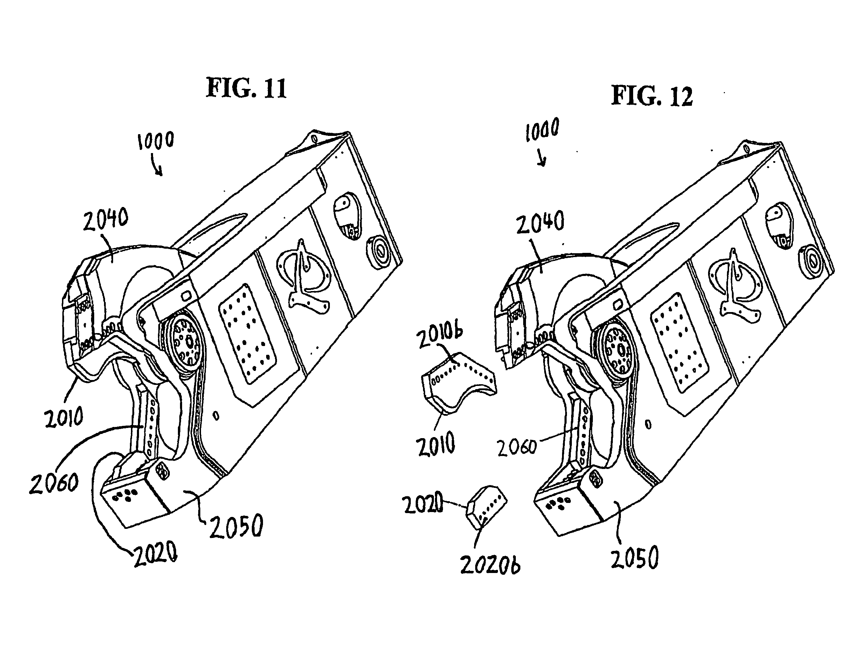

FIG. 12 is a partially-exploded, front, left perspective view of the shears in FIG. 9;

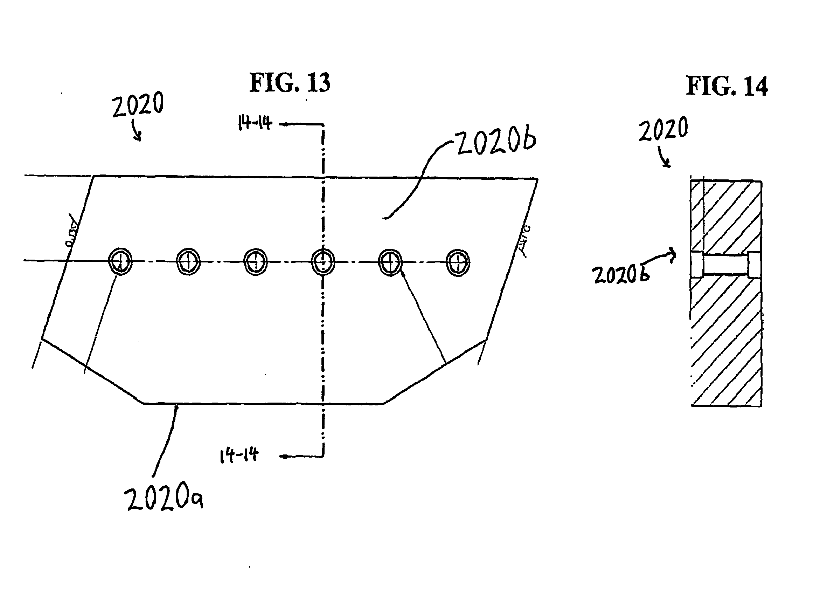

FIG. 13 is a side view of a lower secondary raised blade insert member of the shears in FIG. 9;

FIG. 14 is a cross-sectional view of the insert in FIG. 13;

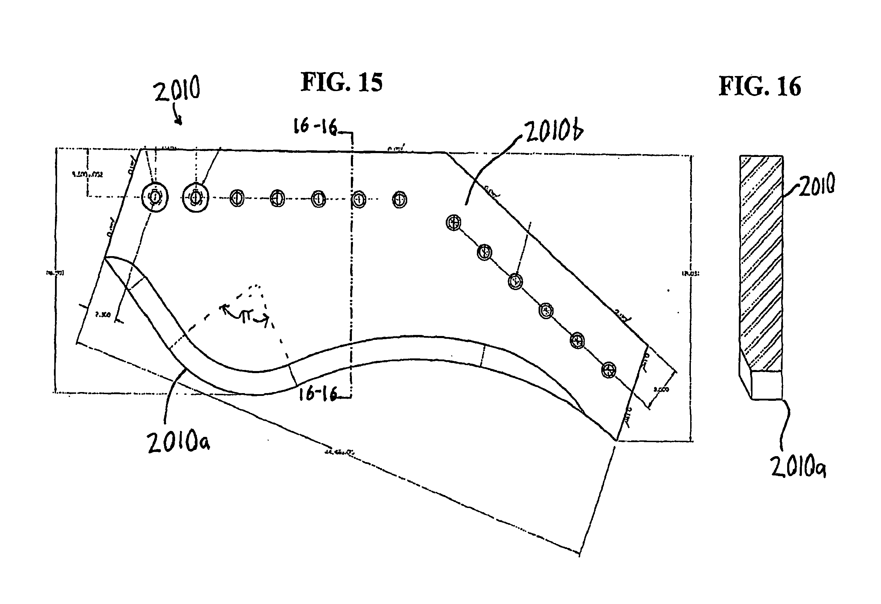

FIG. 15 is a side view of an upper blade insert member of the shears in FIG. 9; and

FIG. 16 is a cross-sectional view of the insert in FIG. 15.

### DETAILED DESCRIPTION OF EMBODIMENTS OF THE INVENTION

FIGS. 1-6 illustrate a material-processing shears 10 according to an embodiment of the present invention. As described in detail below, the shears 10 comprise an upper jaw 20, a lower jaw 30, a stick 40, and a hydraulic cylinder 50.

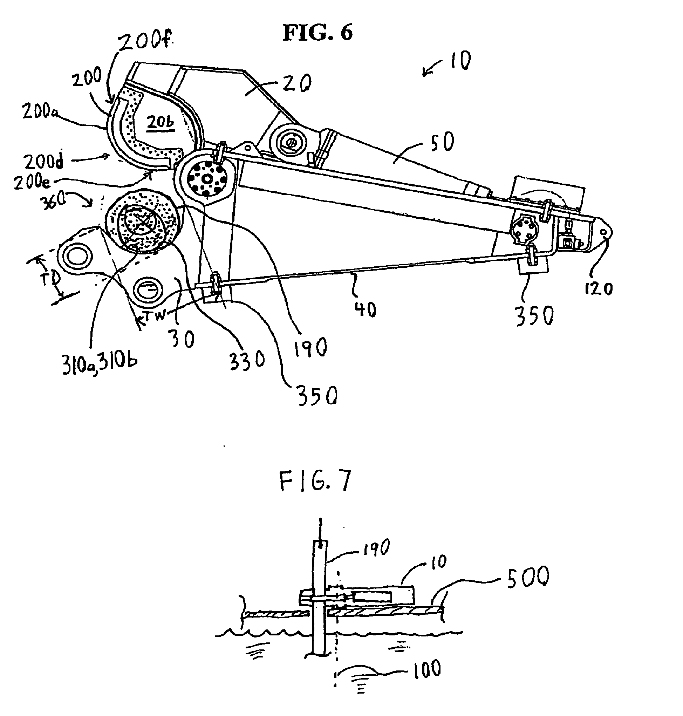

In the illustrated embodiment, the jaws 20, 30 connect to each other for relative pivotal movement about a laterally extending pivot axis 100 between an open position (shown in FIGS. 1 and 6) and a closed position. However, the jaws 20, 30 may alternatively movably connect to each other in any other suitable manner that provides for relative movement between open and closed positions (e.g., 4-bar mechanism, etc.) without deviating from the scope of the present invention.

The stick 40 extends rearwardly from the lower jaw 30 and defines a frame of the shears 10. The stick 40 may be rigidly attached to or integrally formed with the lower jaw 30. As shown in FIGS. 1, 5, and 6, the stick 40 includes a plurality of mounting lugs 120 that facilitate attachment of the shears 10 to support cables 130 of a base machine 140 (e.g., oil platform, ship, barge, crane, etc.). The position and number of lugs 120 preferably facilitate mounting the shears 10 to the base machine 140 in any one of three orientations: (a) horizontally with the pivot axis 100 oriented horizontally for cutting horizontally extending work pieces; (b) horizontally with the pivot axis oriented vertically for cutting vertically extending work pieces; and (c) vertically for cutting horizontally extending work pieces disposed directly below the shears 10. The various lugs 120 may be connected to independently controllable cables 130 to facilitate controlled three-dimensional pivotal and translational movement of the shears 10. Consequently, even when horizontally (or vertically) mounted to the base machine, the shears 10 can be pivoted to cut vertically (or horizontally) extending or slanted work pieces.

According to an alternative embodiment of the present invention, the stick 40 comprises a mounting bracket for mounting to the shears 10 to an excavator. The mounting bracket may be designed to mount the shears 10 to the boom and/or stick of the excavator.

The double-acting hydraulic cylinder 50 pivotally connects to the upper jaw 20 and the stick 40 (or the lower jaw 30) such that extension and contraction of the cylinder 50 open and close the jaws 20, 30. The hydraulic cylinder 50 is preferably strong enough to provide enough power to the shears 10 to cut through conductor pipe 190 (see FIG. 6). According to various embodiments of the present invention, the cylinder of the hydraulic cylinder 50 has an inside diameter of at least 10 inches, at least 12 inches, at least 18 inches, and/or at least 20 inches.

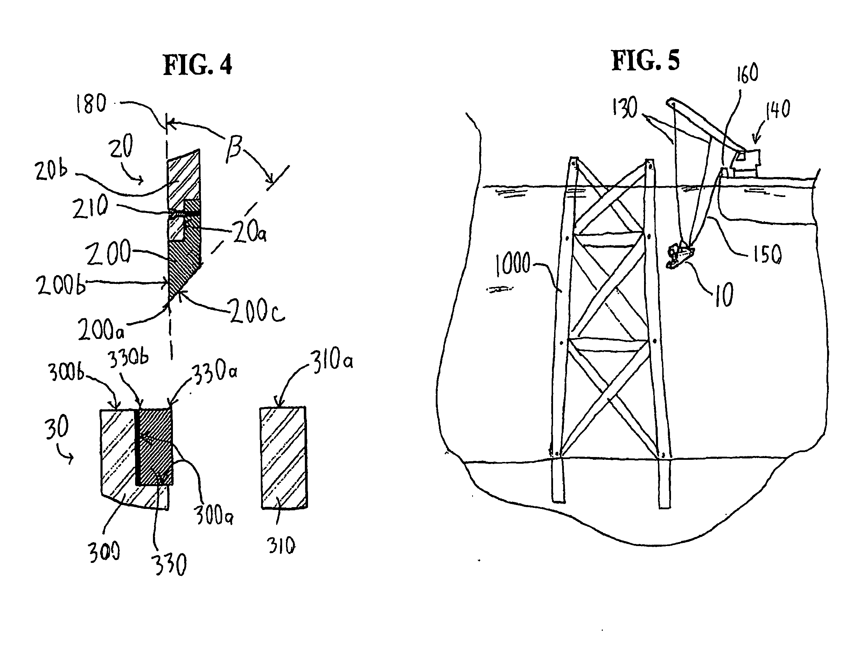

As shown in FIG. 5, hydraulic lines 150 extend from the cylinder 50 to a hydraulic power pack 160 on the base machine 140. The power pack 160 selectively supplies pressurized hydraulic fluid to the cylinder 50 to open and close the jaws 20, 30.

The power pack 160 includes a take up reel to take up slack in the lines 150 or let out line 150 as the shears 10 are moved away from the power pack 160. The lines 150 are preferably long enough to enable the shears 10 to reach the sea floor beneath an oil platform anchored in a conventional depth of water (e.g., at least 100 feet, at least 200 feet, at least 400 feet, at least 500 feet, at least 600 feet, and/or between 100 and 7000 feet). The lines 150 may be sheathed to protect them from sub-sea debris and discourage rupture of the lines 150. As shown in FIG. 1, a cover plate 170 partially covers a rearward end of the cylinder 50 and associated line 150 connections to protect such components from debris and impact during sub-sea use of the shears 10.

While the illustrated shears 10 utilizes a hydraulic cylinder 50 to open and close the jaws 20, 30, any other suitable actuator may alternatively be used to operate the jaws 20, 30 without deviating from the scope of the present invention (e.g., fluid driven actuator, electric actuator, etc.).

According to an alternative embodiment of the present invention, the hydraulic power pack 160 is mounted directly to or within the stick 40 such that the shears 10 and power pack 160 form a self-contained shearing system. The power pack 160 may be powered by any suitable power source (e.g., internal combustion engine, electricity, etc.). The hydraulic power pack 160 may be defined by the base machine 140, itself, in the case of hydraulic-power-equipped base machines 140 such as excavators.

As shown in FIG. 4, the upper jaw 20 includes an upper blade insert member 200 that attaches to a correspondingly shaped seating surface 20a of the upper jaw 20 via bolts 210 or other suitable fasteners. As shown in FIGS. 1 and 3, the blade insert member 200 includes a cutting edge 200a that is convex over a majority of its length. The convexity defines an arc α. According to various embodiments of the present invention, the arc α is between 60 and 360 degrees, at least 90 degrees, at least 100 degrees, at least 110 degrees, and/or about 118 degrees.

In the illustrated embodiment, the convexity has a semi-circular shape, a central portion 200d of which bulges toward the lower jaw 30. However, the convexity may alternatively define a variety of other convex shapes without deviating from the scope of the present invention (e.g., variable radius curve, semi-elliptically shaped curve, a bulged convex curve, etc.). Moreover, the cutting edge 200a may have a variety of other shapes that nonetheless cause it to bulge toward the lower jaw 30 (e.g., a pointed bulge, a V-shape with an apex of the V pointing toward the lower jaw 30; a truncated V-shape in which the apex of the V is rounded and bulges toward the lower jaw 30; a polygonal shape that bulges toward the lower jaw 30; a spade-like shape).

As shown in FIG. 6, the bulge 200d of the cutting edge 200a is preferably disposed toward a central portion of the cutting edge 200a as viewed from the side. Consequently, the bulged portion 200d of the cutting edge 200a contacts and pierces a work piece 190 first at a localized position on the work piece 190 as the jaws 20, 30 close. The shape of the cutting edge 200a therefore focuses the force of the shears 10 at the localized position to increase the cutting power of the shears 10. As the cutting edge 200a continues to cut through the work piece 190, proximal and distal portions 200e, 200f of the cutting edge 200a disposed on opposite sides of the bulge 200d are oppositely angled relative to a direction of motion of the cutting edge 200a such that the proximal and distal sides 200e, 200f tend to create opposing forces that push contacting portions of the work piece 190 disposed on opposite sides of the bulge 200d toward and away from the pivot axis 100. The forces tend to cancel each other out and act in a direction perpendicular to the direction of motion of the blade insert member 200, which tends to limit deformation of the work piece 190 relative to a conventional flat cutting edge that develops cutting/deforming forces in a single direction. The cutting edge 200a therefore continues to cut through the work piece 190 without significantly deforming the work piece 190.

As shown in FIGS. 3 and 6, the cutting edge 200a is preferably large enough to accommodate conductor pipes 190. According to various embodiments of the present invention, the first cutting edge is between 10 and 60 inches long, at least 20 inches long, at least 30 inches long, and or at least 40 inches long.

As shown in FIG. 4, the blade insert member 200 includes first and second surfaces 200b, 200c that intersect each other at the cutting edge 200a. As viewed in a plane that perpendicularly intersects the cutting edge 200a, the second surface 200c forms an acute angle β with the first surface 200b. According to various embodiments of the present invention, the angle β is less than 80 degrees, less than 70 degrees, less than 55 degrees, and/or about 45 degrees. The angle β may remain constant over the length of the cutting edge 200a, or may vary over the length of the cutting edge 200a.

The first surface 200b is substantially planar and perpendicular to the jaw axis 100. Accordingly, as the jaws 20, 30 close, the first surface 200b slides past cut portions of the work piece 190 without significantly deforming the work piece 190. Conversely, the second surface 200c forms an acute angle with the jaw axis 100 (or a plane 180 that is perpendicular to the jaw axis 100). Accordingly, as the jaws 20, 30 close, the second surface 200c pushes cut portions of the work piece 190 laterally outwardly (i.e., in a direction parallel to the jaw axis 100). A reaction force applied by the work piece 190 to the second surface 200c tends to push the upper blade insert member 200 in an opposite lateral direction toward a lower blade insert member 330 of the lower jaw 30, thereby fostering close shearing contact of the upper and lower blade insert members 200, 330.

The surfaces 200b, 200c may be symmetrical to each other relative to the plane 180. The angle β formed between the surfaces 200b, 200c may be a right angle such that each surface 200b, 200c deviates from the plane 180 by 45 degrees. Alternatively, the angle β may be acute (e.g., less than 80 degrees, less than 70 degrees, less than 55 degrees, and/or about 45 degrees).

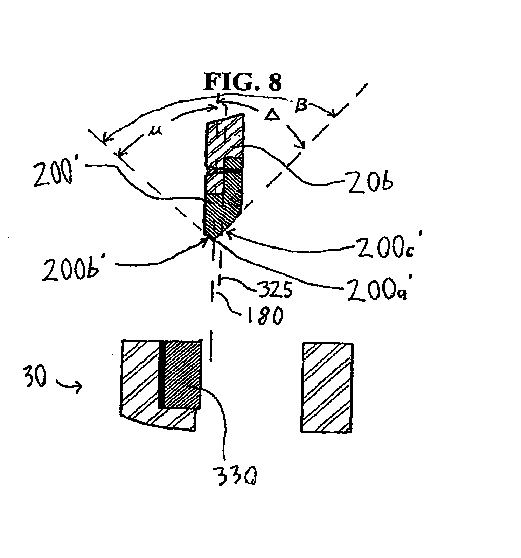

In the embodiment illustrated in FIGS. 1-4, the first surface 200b is planar and perpendicular to the jaw axis 100. However, according to the alternative embodiment illustrated in FIG. 8, a first surface 200b' of an insert member 200' forms an acute angle µ with the plane 180 that is perpendicular to the jaw axis 100. According to various embodiments of the present invention, the angle µ is less than 80 degrees, less than 70 degrees, less than 50 degrees, less than 40 degrees, between 5 and 85 degrees, and/or about 30 degrees. The angle µ may discourage the insert 200' from deflecting laterally toward the insert 330 so much that the inserts 200', 330 interfere with each other when the shears closes. The surface 200c' forms an acute angle Δ with the plane 180. The angle Δ may be the same as the angle µ or differ from the angle µ. According to various embodiments of the present invention, the angle Δ is less than 60 degrees, less than 50 degrees, about 45 degrees, and/or between 60 and 30 degrees.

As shown in FIG. 8, a cutting edge 200a' of the insert 200' is offset relative to a centerline 325 of the insert 200' toward the side of the insert 200' that includes the surface 200b'. According to various embodiments of the present invention, the offset results in the cutting edge 200a' being disposed 1/3, 1/4, less than half, and/or about 23.5 % of the way across the width of the insert 200'. Consequently, the surfaces 200b', 200c' form V shape that is offset relative to the centerline 325.

Returning to the embodiment illustrated in FIG. 4, the size and shape of the blade insert member 200 may make the member 200 weigh 100 pounds or more. According to various embodiments of the present invention, the member 200 weighs at least 100 pounds, at least 150 pounds, and/or at least 250 pounds. In the illustrated embodiment, the blade insert member 200 comprises a unitary piece. However, the blade insert member 200 may alternatively comprise a plurality of discrete blade insert members without deviating from the scope of the present invention.

The upper jaw 20 includes a relatively thin portion 20b. As shown in FIGS. 2 and 6, a thickness T of the portion 20b is preferably small to facilitate sliding passage of the cut work piece 190 by the portion 20b as the shears 10 cut through the work piece 190. According to various embodiments of the present invention, the thickness T may be less than 6 inches, less than 5 inches, less than 4 inches, and/or about 3 ½ inches. As viewed in FIGS. 2 and 3, the portion 20b preferably has a height H and width W that are sufficiently large that when the jaws 20, 30 close after cutting a work piece 190, the sheared ends of the work piece 190 do not extend beyond the portion 20b. Accordingly, the shears 10 can cut through a work piece 190 such as a conductor pipe 190 (illustrated in FIG. 6) without having to separate the cut portions of the pipe on either side of the blade insert member 200 by more than the thickness T. According to an embodiment of the present invention that is designed to cut through 30 inch outside diameter conductor pipe, H and W are both preferably larger than 30 inches.

According to an alternative embodiment of the present invention, the upper blade insert member is circular such that its cutting edge defines a complete circle. The blade insert member mounts to the upper jaw in such a way as to enable the blade insert member to be disposed in a variety of pivotal positions, each position being pivotally offset from the other positions about a pivot axis that is parallel to the jaw axis 100. The connection between the upper jaw and blade insert member may allow for a plurality of discrete positions (e.g., 3 positions pivotally separated from each other by 120 degrees) or may allow for infinitely variable pivotal positioning. When an actively used portion of the cutting edge becomes worn, the blade insert member may be pivoted to position a less worn portion of the cutting edge into an active position (i.e., facing the lower jaw).

As shown in FIGS. 1-4, the lower jaw 30 comprises two laterally spaced plates 300, 310 with cross-bars 320 extending laterally therebetween. As shown in FIGS. 1 and 4, the lower jaw 30 also includes blade insert members 330 that attach to correspondingly shaped seating surfaces 300a of the plate 300 via bolts 340 or other suitable fasteners. The blade insert members 330 define a cutting edge 330a that shearingly mates with the cutting edge 200a when the jaws 20, 30 move from the open position to the closed position. Although termed a cutting edge 330a, the cutting edge 330a generally only cuts the work piece at the very end of the closing stroke of the shears 10 as the cutting edges 200a, 330a shearingly pass by each other. Throughout a majority of the closing stroke of the shears 10, the cutting edge 200a cuts through the work piece 190 while the cutting edge 330a and surface 330b operate to support the work piece 190 without substantially cutting into the work piece 190. Thus, cutting action of the shears 10 is predominantly carried out by the upper blade insert member 200, and substantive cutting of the work piece 190 is localized at the intersection between the work piece 190 and the upper blade insert member 200. The localized cutting focuses the force of the shears 10 at the cutting edge 200a to improve the cutting power of the shears 10 and enable the shears 10 to cut through larger, stronger work pieces such as larger conductor pipes.

An upper surface 310a of the plate 310 is preferably disposed slightly lower than an upper surface 300b of the plate 300 so that a work piece 190 primarily rests on the plate 300 and a majority of the closing force of the shears 10 is exerted through the plate 300 and insert members 330. This focuses the cutting force of the shears 10 along a single cutting plane that extends between the cutting edge 200a and the cutting edge 330a, which improves cutting efficiency. Alternatively, the surfaces 300b, 310a may be parallel to each other and jointly support a work piece without deviating from the scope of the present invention.

The bulged edge 200a provides an initial point of contact with the work piece 190 (e.g., a conductor pipe), and, in contrast with a straight or linear cutting edge, provides a cutting edge that extends at an angle away from a plane that encompasses the initial point of contact and the adjoining uppermost surface portion of the work piece 190 to be cut. This applies a greater concentration of force in comparison with a straight blade. As the blade 200 moves downwardly through the work piece 190, the angle that the cutting edge 200a forms with the thickness of the work piece 190 tends to apply a transverse separating force to the walls of the work piece 190. At the same time, the cradle 360 tends to contain the separation of the work piece 190 being cut. As a result, the upper blade 200 initially pierces the upper surface of the work piece 190, and then progressively cuts into the work piece 190. As the blade 200 progresses into the work piece 190, a tangent line taken at the portion of the cutting edge 200a making contact with a thickness of the work piece 190 changes from an angle that is substantially zero (i.e., lying in the aforementioned plane) and approaches (but never reaches) a perpendicular angle.

The blade insert members 330 are preferably identical to each other and indexable. Accordingly, by flipping the relative positions of the forward and rearward members 330, less worn portions of the cutting edge 330a may be utilized. Additionally and/or alternatively, as shown in FIG. 4, the members 330 may be indexed by flipping the members 180 degrees such that less worn edges 330b of the members 330 may be used as the cutting edge.

As shown in FIGS. 1, 3, and 6, the cutting edge 330a and upper surfaces 300b, 310a are substantially concave. As shown in FIG. 3, the concavity defines an arc ε. According to various embodiments of the present invention, the arc ε is between 50 and 180 degrees, at least 80 degrees, at least 90 degrees, at least 110 degrees, at least 120 degrees, and/or about 135 degrees. The concavity creates a cradle 360 into which a work piece 190 to be cut fits. The cradle 360 tends to keep work pieces 190 properly positioned between the jaws 20, 30 before and during cutting operations. Conversely, the concave cradle 360 tends to keep the shears 10 properly positioned relative to the work piece 190. As shown in FIG. 6, the cradle 360 has a throat width TW and a throat depth TD that are sized to facilitate retention of the work piece 190 in the cradle 360 before and during cutting operations. Such positioning is advantageous in environments in which the relative positions of the shears 10 and work piece 190 are not easily fixed (e.g., when the shears 10 are suspended from cables 130 that permit the shears 10 to swing; when the shears 10 are mounted to a floating vessel that tends to move with waves/current while the work piece is fixed to the sea floor).

The shape of the concave cradle 360 is preferably generally smoothly curved and follows a roughly semicircular path having a diameter slightly larger than a diameter of the intended work piece 190. According to one embodiment that is designed to cut 30 inch OD conductor pipe, the diameter of the cradle 360 path is larger than 30 inches, for example about 32 inches. Consequently, the cradle 360 has a contour that generally matches the contour of the work piece 190. The generally matching contours of the cradle 360 and work piece 190 tend to limit the extent to which the work piece 190 radially deforms (i.e., toward and away from the jaw axis 100) during a cutting operation. With deformation limited, the blade 200 continuously cuts through a limited amount of material of the work piece 190 as the jaws 20, 30 close. In contrast, various conventional shears substantially deform work pieces before cutting them. Such deformation compacts the uncut work piece and forces the conventional shears to eventually shear through a larger amount of deformed material at once. This material buildup may cause the conventional shears to stall.

In the illustrated embodiment, the diameter of the cradle 360 is designed to be slightly larger than the diameter of the work piece to be cut. However, smaller work pieces may also be cut in a shears designed for larger work pieces without deviating from the scope of the present invention.

In the illustrated embodiment, the size and shape of the cradle 360 are designed for use with work pieces having a specific size or range of sizes. However, according to an alternative embodiment of the present invention, the cradle 360 has an adjustable size that may be adjusted to accommodate a variety of differently sized and/or shaped work pieces.

In the illustrated embodiment, the cradle 360 has a smooth concave shape as viewed from the side. However, the cradle 360 may form a recess into which the work piece 190 fits in a variety of other ways without deviating from the scope of the present invention. For example, the cradle 360 may be V-shaped with the apex of the V pointing away from the upper jaw 20 so that the V-shape defines a recess into which the work piece 190 fits. Alternatively, the cradle 360 may have a polygonal, compound curvilinear, and/or mixed curved/linear shape such that the cradle 360 includes a recess into which the work piece 190 fits.

In the illustrated embodiment, the cradle 360 is disposed on the lower jaw 30 such that the weight of a work piece 190 may help keep the work piece 190 in the cradle 360 and between the jaws 20, 30 during a cutting operation. Alternatively, the shears 10 may be turned upside down during operation such that the lower jaw 30 is above the upper jaw 20. In such an upside down configuration, the weight of the shears 10 may keep the cradle 360 in contact with the work piece 190 during a cutting operation (e.g., the cradle 360 hooks onto and the shears 10 partially hang from the work piece 190).

In the illustrated embodiment, cutting edge 330a and upper surfaces 300b, 310a are generally smooth. However, according to an alternative embodiment of the present invention, the cutting edge 330a and upper surfaces 300b, 310a are serrated to help discourage the work piece 190 from rotating relative to the shears 10 about a laterally extending axis (i.e., the longitudinal axis of the work piece that is parallel to the jaw axis 100) during a cutting operation. Prevention of such relative rotation may reduce stresses in the upper blade insert member 200. If the work piece 190 is in a fixed position relative to the ground (e.g., anchored to the sea floor), prevention of such relative rotation may discourage the shears 10 from pivoting about the work piece 190 during use.

As shown in FIG. 4, the blade insert member 200 is laterally disposed between the laterally-separated plates 300, 310 such that the blade insert member passes between the plates 300, 310 and shearingly mates with the blade insert member 330 as the jaws 20, 30 move from their open to their closed position.

While the illustrated blade insert members 200, 330 are removably attached to the remainder of the jaws 20, 30, one or more of the cutting blades may alternatively be integrally formed with the jaws 20, 30 without deviating from the scope of the present invention.

The shears 10 are preferably constructed to withstand the high forces associated with cutting conductor pipe. Consequently, the shears 10, including the jaws 20, 30, stick 40, and cylinder 50 (without hydraulic fluid) may weigh thousands of pounds. According to various embodiments of the present invention, the shears 10 weigh at least 200 pounds, 500 pounds, 1,000 pounds, 10,000 pounds, 20,000 pounds and/or about 40,000 pounds.

Components of the shears 10 are preferably constructed to withstand the sub-sea conditions. For example, the shears 10 may use corrosion-resistant materials such as nickel-including pivot pins. The various pivotal connections (e.g., between the jaws 20, 30; between the cylinder 50 and the upper jaw 20; and between the cylinder 50 and the stick 40) may be sealed to prevent intrusion of salt water. Sulfide may be used in the bearings to discourage corrosion. Various components of the shears 10 may comprise stainless steel. Corrodible components may be coated with a protective coating or paint to protect them from corrosive salt water.

The shears 10 may also include features that make it particularly well suited for sub-sea use. For example, corners and edges of the shears 10 may be rounded so as to reduce catch points that might otherwise become entangled with sub-sea debris (e.g., cables, sea weed, components of the oil platform, etc.). A water jet may be disposed on the bottom of the lower jaw 30 and/or stick 40 and oriented to spray downwardly into silt on the sea floor, thereby clearing the silt and enabling the shears 10 to cut a lower point of the work piece (e.g., below the sea floor). The shears 10 may include a grapple that loosely mounts to the work piece and allows the shears 10 to slide axially along the work piece to help reposition the shears 10 after each cut of the work piece. A robotic arm may extend from the shears 10 to help position the shears 10 around a subaqueous work piece 190. As shown in FIGS. 1 and 3, support legs 350 mount to the stick 40 to facilitate stable placement of the shears 10 on the deck of a base machine 140 such as a ship, oil platform, or barge. The support legs 350 may also facilitate the stand-alone use of the shears 10 on dry land (e.g., to process conductor pipe at salvage yards after the conductor pipe is detached from the oil platform and hauled to the salvage yard in long pieces). The cross-bars 320, stick 40, and/or jaws 20, 30 may include mounting lugs adapted to support one or more attachments (e.g., video camera, water jet, robotic arm, grapple, etc.).

According to an alternative embodiment of the present invention as shown in FIG. 7, the shears 10 are mounted to an above-water deck 500 of an oil platform, ship, barge, or other structure. The axis 100 is oriented vertically such that a conductor pipe 190 is cut into pieces as it is pulled (e.g., via a support cable of a crane) or pushed upwardly from within the body of water.

Hereinafter, use of the shears 10 in connection with a decommissioned oil platform 1000 is described with reference to FIG. 5. The mounting lugs 120 are attached to support cables 130 of the base machine 140 (illustrated in FIG. 5 as a ship-mounted crane). The hydraulic lines 150 are attached to the shears 10 and the hydraulic power pack 160. The shears 10 are then lowered from the deck of the base machine 140 into the body of water (e.g., a lake, river, sea, bay, ocean, etc.). The base machine 140 positions the shears 10 such that the work piece to be processed (e.g., a conductor pipe 190 or other structure that forms part of the oil platform 1000) is disposed between the open jaws 20, 30 of the shears. An operator then uses the power pack 160 to operate the cylinder 50, close the jaws 20, 30, and cut the work piece.

The shape of the blade insert member 200 (e.g., the substantial convexity and/or the acute cutting blade angle β) and/or the shape of the narrow portion 20b make the shears 10 well suited for cutting conductor pipe of the platform 1000. As the jaws 20, 30 close, the cutting edge 200a pierces the conductor pipe 190 at a single location to focus the force of the shears 10 at that location. As the blade insert member 200 cuts through the pipe 190, the angle β causes the blade insert member 200 to displace the cut portions of the pipe 190 to either side of the blade insert member 200 and narrow portion 20b. The resulting spreading of the cut portions of the pipe 190 in a lateral direction away from the blade insert member 200 and narrow portion 20b limits deformation of these cut portions as the jaws 20, 30 continue to close. Consequently, the cutting force generated by the hydraulic cylinder 50 remains focused on cutting through the remainder of the pipe 190 rather than on deforming/compressing already cut portions of the pipe 190. In contrast, a conventional shears with flat mating blades significantly deforms a conductor pipe before cutting the pipe. The force exerted by such conventional shears to deform the pipe is partially wasted because it is not focused on cutting through the pipe.

According to various embodiments of the present invention, the shears 10 are used to cut through conductor pipe that has an outside diameter that is at least 15 inches, at least 24 inches, about 30 inches, about 64 inches, and/or between 24 and 64 inches or larger. The conductor pipe may include 2, 3, or more nested pipes.

FIGS. 9-16 illustrate a material processing shears 1000 according to an alternative embodiment of the present invention. According to an aspect of this embodiment, an upper blade insert member 2010 and a lower secondary raised blade insert member 2020 can be retrofit onto an otherwise conventional shears 1000, such as the shears disclosed in U.S. Patent Application Publication No. 2005-0091852 A1 or U.S. Patent No. 5,992,023, the contents of which are incorporated herein by reference.

The insert member 2010 may be bolted or otherwise attached to an upper jaw 2040 of the shears 1000 in place of the conventional upper primary and secondary blade insert members. The angle formed between the primary and secondary insert member seats in the upper jaw 2040 facilitate a secure attachment of mounting portion 2010b of the insert member 2010 to the insert member seats in the upper jaw 2040. Similarly, a mounting portion 2020b of the insert member 2020 may be bolted or otherwise attached to a secondary insert member seat in the lower jaw 2050 of the shears 1000 in place of the conventional secondary lower blade insert member. As shown in FIGS. 11 and 12, a conventional primary lower blade insert member 2060 is preferably used in conjunction with the insert member 2020. Consequently, the shape and size of the insert members 2010, 2020 and their respective mounting portions (e.g., bolt holes and adjacent shapes) facilitate attachment of the insert members 2010, 2020 to a conventional shears, which provides the shears 1000 with cutting blades that have a generally similar shape and purpose as the blades of the shears 10.

The blade insert member 2010 includes a substantially convex cutting edge 2010a that is well-suited for piercing and cutting through such material as conductor pipe. As best shown in FIG. 10, the insert member 2020 includes a raised portion 2020a that raises material to be processed off of the boxed structure of the lower jaw 2050 relative to shears disclosed in U.S. Patent Application Publication No. 2005-0091852 A1 or U.S. Patent No. 5,992,023. Raising the material to be processed may help the blade insert member 2010 to cut through the material before encountering the resistance and friction associated with the boxed lower structure of the lower jaw 2050.

As shown in FIG. 9, the convex cutting edge 2010a and raised portion 2020a are preferably aligned relative to each other such that they pass by each other as the jaws 2040, 2050 close. Such positioning may facilitate the efficient cutting of material such as large diameter pipe.

The shape of the cutting edge 2010a shown in FIG. 15 is to scale. A generally distal portion of the cutting edge 2010a bulges downwardly toward the lower jaw 2050. As shown in FIG. 15, the bulging portion of the cutting edge 2010a may include an arc π of between 25 and 180 degrees, at least 45 degrees, at least 55 degrees, and/or at least 65 degrees. The cutting edge 2010a may have a compound curvature. As shown in FIG. 15, while the distal portion of the cutting edge 2010a is convex, the proximal portion of the cutting edge 2010a is concave. Various modifications may be made to the shape of the cutting edge 2010a without deviating from the scope of the present invention.

Although the illustrated embodiments are particularly well suited for cutting conductor pipe, the shears 10, 1000 may alternatively be used to cut a variety of other types of work pieces without deviating from the scope of the present invention (e.g., nested pipes that lack grouting therebetween; single pipes, I-beams, etc.).

The foregoing description is included to illustrate the operation of the preferred embodiments and is not meant to limit the scope of the invention. To the contrary, those skilled in the art should appreciate that varieties may be constructed and employed without departing from the scope of the invention, aspects of which are recited by the claims appended hereto.

## Claims

1. A method of using a material processing shears (10) for cutting a workpiece (190) wherein the work piece (190) comprises a conductor pipe having inner and outer metal pipes with grouting disposed between the inner and outer metal pipes, the shears (10) comprising:
first and second jaws (20, 30) pivotally connected to each other for relative pivotal movement about a jaw axis (100) between open and closed positions, the first jaw (20) having a first cutting blade (200) with a first cutting edge (200a); and
a fluid driven actuator (50) operatively extending between the jaws (20, 30) for selective powered movement of the jaws (20, 30) between their open and closed positions, the method comprising:
positioning the shears (10) such that a work piece (190) is disposed between the first and second jaws (20, 30); and
cutting the work piece (190) primarily with the first cutting blade (200) such that the cutting of the work piece (190) is predominantly localized at an intersection between the work piece (190) and the first cutting blade (200), while the second jaw (30) predominantly supports the work piece (190) without cutting into it,

2. A method according to claim 1, wherein the outer metal pipe has an outside diameter of at least 15 inches.

3. A method according to claim 2, wherein the outside diameter of the outer metal pipe is at least 24 inches.

4. A method according to claim 3, wherein the outside diameter of the outer metal pipe is at least 29 inches.

5. A method according to claim 2, wherein:
the conductor pipe further comprises an intermediate metal pipe disposed within the outer metal pipe,
the inner metal pipe is disposed within the intermediate metal pipe, and
the grouting is disposed between the outer and intermediate metal pipes and between the inner and intermediate metal pipes.

6. A method according to claim 1, wherein the conductor pipe comprises a component of a sea-floor mounted oil platform.

7. A method according to claim1, wherein, as viewed along the jaw axis, the first cutting edge includes a portion that bulges toward the second jaw.

## Patentansprüche

1. Verfahren zur Verwendung einer Materialverarbeitungsschere (10) zum Schneiden eines Werkstücks (190), wobei das Werkstück (190) ein Standrohr umfasst, das ein inneres und ein äußeres Metallrohr mit einem Verguss aufweist, der zwischen dem inneren und dem äußeren Metallrohr angeordnet ist, wobei die Schere (10) Folgendes umfasst:
einer erste und einer zweite Klinge (20, 30), die zur relativen Drehbewegung um eine Klingenachse (100) zwischen einer geöffneten und einer geschlossenen Position drehbar miteinander verbunden sind, wobei die erste Klinge (20) ein erstes Schermesser (200) mit einer ersten Schneidekante (200a) aufweist, und
ein fluidbetriebenes Betätigungselement (50), das sich zur gezielten angetriebenen Bewegung der Klingen (20, 30) zwischen ihrer geöffneten und ihrer geschlossenen Position funktionsfähig zwischen den Klingen (20, 30) erstreckt, wobei das Verfahren Folgendes umfasst:
Positionieren der Schere (10) derart, dass ein Werkstück (190) zwischen der ersten und der zweiten Klinge (20, 30) angeordnet wird, und
Schneiden des Werkstücks (190) primär mit dem ersten Schermesser (200) derart, dass das Schneiden des Werkstücks (190) vorwiegend an einer Schnittstelle zwischen dem Werkstück (190) und dem ersten Schermesser (200) stattfindet, während die zweite Klinge (30) vorwiegend das Werkstück (190) abstützt, ohne in es zu schneiden.

2. Verfahren nach Anspruch 1, wobei das äußere Metallrohr einen Außendurchmesser von mindestens 15 Inch aufweist.

3. Verfahren nach Anspruch 2, wobei der Außendurchmesser des äußeren Metallrohrs mindestens 24 Inch beträgt.

4. Verfahren nach Anspruch 3, wobei der Außendurchmesser des äußeren Metallrohrs mindestens 29 Inch beträgt.

5. Verfahren nach Anspruch 2, wobei
das Standrohr ferner ein Metallzwischenrohr aufweist, das im äußeren Metallrohr angeordnet ist,
das innere Metallrohr im Metallzwischenrohr angeordnet ist und
der Verguss zwischen dem äußeren und dem Metallzwischenrohr und zwischen dem inneren und dem Metallzwischenrohr angeordnet ist.

6. Verfahren nach Anspruch 1, wobei das Standrohr eine Komponente einer auf dem Meeresboden montierten Ölplattform umfasst.

7. Verfahren nach Anspruch 1, wobei die erste Schneidkante, entlang der Klingenachse betrachtet, einen Abschnitt beinhaltet, der sich hin zur zweiten Klinge wölbt.

## Revendications

1. Procédé d'utilisation d'une cisaille de traitement de matériau (10) pour couper une pièce (190), dans lequel la pièce comprend un tube conducteur ayant des tuyaux métalliques intérieur et extérieur avec un ciment disposé entre les tuyaux métalliques internes et externes, la cisaille (10) comprenant :
un premier et un second mors (20, 30) raccordés à pivotement l'un à l'autre pour un mouvement pivotant relatif autour d'un axe de mors (100) entre des positions d'ouverture et de fermeture, le premier mors (20) ayant une première lame de coupe (200) avec un premier bord de coupe (200a) ; et
un actionneur (50) entraîné par un fluide et qui s'étend en service entre les mors (20, 30) pour un mouvement activé sélectif des mors (20, 30) entre leurs positions d'ouverture et de fermeture, le procédé comprenant les étapes consistant à :
positionner la cisaille (10) de sorte qu'une pièce (190) soit disposée entre le premier et le second mors (20, 30) ; et
couper la pièce (190) principalement avec la première lame de coupe (200) de sorte que la coupe de la pièce (190) soit localisée de manière prédominante à une intersection entre la pièce (190) et la première lame de coupe (200), tandis que le second mors (30) support de manière prédominante la pièce (190) sans participer à sa coupe.

2. Procédé selon la revendication 1, dans lequel le tuyau métallique externe a un diamètre externe d'au moins 38,10 cm (15 pouces).

3. Procédé selon la revendication 2, dans lequel le diamètre externe du tuyau métallique externe est d'au moins 60,96 cm (24 pouces).

4. Procédé selon la revendication 3, dans lequel le diamètre externe du tuyau métallique externe est d'au moins 73,66 cm (29 pouces).

5. Procédé selon la revendication 2, dans lequel :
le tube conducteur comprend en outre un tuyau métallique intermédiaire disposé dans le tuyau métallique externe,
le tuyau métallique interne est disposé dans le tuyau métallique intermédiaire, et
le ciment est disposé entre les tuyaux métalliques externe et intermédiaire et entre les tuyaux métalliques interne et intermédiaire.

6. Procédé selon la revendication 1, dans lequel le tube conducteur constitue un composant d'une plateforme pétrolière montée au fond de la mer.

7. Procédé selon la revendication 1, dans lequel, telle qu'on l'observe le long de l'axe des mors, le premier bord de coupe comprend une partie qui se renfle vers le second mors.
